# EUROPEAN PATENT SPECIFICATION

(11) **EP 0 492 716 B1**
(45) Date of publication and mention of the grant of the patent: **01.06.1994**
(21) Application number: 91203331.3
(22) Date of filing: 17.12.1991
(51) Int. Cl.: A01J 25/16, A23C 19/064

(54) **Process for treating cheese with liquid**
Verfahren zum Behandeln von Käse mit Flüssigkeit
Procédé de traitement de fromage avec liquide

(30) Priority: 28.12.1990 NL 9002905
(43) Date of publication of application: 01.07.1992
(73) Proprietor: CAMPINA MELKUNIE B.V., NL-6043 BH Roermond (NL)
(72) Inventor: Kempeners, Jozef Gerardus Maria, NL-5924 AK Venlo (NL); Köllmann, Clemens Johannes Willibrordus, NL-5467 JL Veghel (NL)
(74) Representative: Ellowicz, Leo, Drs.

(56) References cited:
- WO-A-86/03651
- FR-A- 1 480 398
- NL-A- 301 654
- NL-A- 7 713 819
- SU-A- 884 635

## Description

This invention relates to a process for treating cheese with a liquid prior to ripening, comprising spraying the liquid against the cheese surface with high-pressure nozzles under a pressure such that the liquid penetrates the cheese surface, and keeping the cheese and the nozzles in a stationary condition relative to each other during the spraying.

Such a process for injecting brine into cheese is known from Russian patent SU-A-884635. This patent relates to a device for carrying out such a process, and does not specify the diameter of the opening of the nozzles and emphasises the transport system for the brine. The usefulness of the installation probably lies in production increase by acceleration of the treatment with brine and improved dosage. Although said patent has been published already on November 30, 1981, the applicant is not aware of any practical application thereof.

The lack of any mention regarding a practical application of the above described system or of a further development thereof cannot be explained otherwise than that this system was not satisfactory. After all the possibility to carry out the treatment of a cheese with brine by injection would mean an enormous progress in the production process. According to the present technology a cheese is salted by immersion in a brine bath or by caring brine to flow over or around the cheese until efficient salt has penetrated the cheese mass by diffusion. This takes a few days and the brine section occupies a considerable space in the cheese factory. Already because of the factors time and space the possibility to carry out the treatment with brine by injection would be technically and economically extremely attractive. In addition, diffusion is a process which is determined by a large number of factors, such as the temperature, the concentration of the brine, the permeability of the cheese mass, the shape of the cheese, the nature of the surface, etc., so that the obtained salt content of the cheese may rather vary. Furthermore in the present salting practice the cheese yields water to the brine which is caused by osmotic effects, so that the strength of the brine has to be readjusted regularly. From a point of view of the environment it is undesirable that brine is regularly discarded into the sewer; when the brine is injected, the superfluous brine is collected and recirculated. When the brine is used for a long period of time, the brine becomes contaminated with whey and other organic ingredients. Consequently growth of undesired micro-organisms can occur. To avoid this the brine is regularly acidified to a pH of 4.5. Thereby the pH of the rind of the cheese is also brought to a value of 4.5-4.6. Consequently the rind becomes hard and can easily break or tear apart, so that decay can occur. By injecting the brine acidification would no longer be necessary because in that case always fresh brine would be used.
All these problems would be eliminated or overcome by injection of the brine and therefore it is clear that not only the above mentioned Russian patent does not offer a satisfactory possibility to inject the brine into the cheese, but that this patent has not even given any cause for further development in this field.

Indeed, injection of brine into the cheese is not feasible by usual methods. In the meat industry the brine injector is known, which is used e.g. for salting hams. This apparatus injects brine via a large number of needles which are driven into the meat. Such an apparatus is unsuitable for injecting brine into cheese, because at the moment the cheese is to be salted it is in fact still nothing else but a pressed curd and only the salting turns this material into cheese. Also the injection of brine under pressure through nozzles, a principle with is not only known from said Russian patent but is also used in the meat industry, e.g. for salting chicken breast, is not satisfactory without special precautions. After all, unavoidably holes are formed in the cheese rind and when these holes subsequently do not close or do not sufficiently close, an undesirable mold growth can occur and in general the cheese then may obtain an undesirable appearance.

It was found that injecting brine by means of a high-pressure nozzle is possible when a number of requirements are complied with, and furthermore it appeared that this system can then also be used for other treating liquids than brine.

Thus this invention provides a process of the kind mentioned in the first paragraph, which process is characterized in that nozzles having a diameter of the outlet (also named opening) of not more than 0.3 mm are used, said nozzles spraying the treating liquid in a convergent jet.

In contrast the commercially available devices for injecting brine into chicken breast and the like, provide a movement of the material to be salted with respect to the nozzles. It has appeared that when the cheese moves with respect to the nozzles (or the nozzles move with respect to the cheese), the resulting small openings are stretched to cuts, whereby a closing problem is created.

A practical range for the operating pressure is about 50-600 bar; preferably the pressure is in the range of 150-350 bar.

The penetration depth is dependent on the operating pressure and the position of the nozzles. The position of the nozzles is variable in the present process; the nozzles can also be pressed against the cheese. The desired penetration depth is dependent on the injected medium. For aroma substances the desired penetration depth exceeds the penetration depth in the case of brine; it is desired to distribute aroma substances over the whole cross-section of the cheese, while brine can slow down the ripening of the cheese and therefore a considerable penetration depth of the brine is not desired. The design of the nozzle should of course be such that a convergent jet of liquid is sprayed from the nozzle and diverges in the cheese. The diameter of the opening of the nozzle should in any case be not more than 0.3 mm and should preferably be not more than 0.2 mm. A lower limit for this diameter depends somewhat on the viscosity of the solution to be sprayed, but generally is of the order of 0.05 mm; preferably diameters of 0.08-1.2 mm are selected. When injecting a suspension, the diameter depends on the size of the suspended particles.

Of course the injection will be performed at a number of points simultaneously in order to ensure a good distribution of the brine in the cheese as quickly as possible and also in order to avoid spraying a too concentrated brine and/or a too large volume per nozzle. Preferably the nozzles are arranged in a regular pattern with respect to each other, suitably one nozzle per square centimeter of cheese surface, and all
nozzles are simultaneously pressed against the cheese surface whereafter the brine injection takes place. However, it is also possible to use a more restricted number of nozzles and to move either the cheese or the nozzles a number of times, so that a regular pattern of injection points comes into being, however provided the nozzles and the cheese do not move with respect to each other during the injection.

The amount of brine per injection and the injection pressure determine the depth to which the brine penetrates into the cheese. Dependent on the shape and the firmness of the cheese, the most favourable conditions can be selected under which a sufficiently deep injection of the brine is achieved, so that thereafter a further distribution of the salt throughout the whole cheese by diffusion becomes possible.

After filling the curd particles into the cheese mold these particles start to fuse to a homogeneous mass, whereby the firmness of the cheese increases. For the injection it is of importance that the curd is optimally fused.

The diffusion process can be accelerated by increasing the temperature of the cheese or by injecting warm brine. For instance the cheese formed at about 30°C can suitably be carried without cooling to the injection apparatus, and optionally warm brine, e.g. at 30°C, can be sprayed.

Because the penetrating jet of brine still causes some deformation of the cheese surface, it can be useful sometimes to press and/or heat the cheese again after the injection, which also promotes the closing of the surface.

In order to avoid any possible loss of brine or another treating liquid by "back spraying" of the liquid, preferably a binding is applied around the cheese or the injection into the cheese takes place in the vessel (mold).

Furthermore, it was found that a slight increase of the pH of the outer portion of the cheese promotes the closing of injection-holes. For this purpose any alkaline-reacting substance can be added to the brine. As discussed above, in the traditional method for treating with brine the brine is regularly acidified, whereby the rind can break and tear apart. In contrast to the traditional method for treating with brine, the present process always uses fresh brine, while, as mentioned, the pH can be corrected, whereby the closing of the pin-holes in the rind is promoted.

A further important advantage is that for the traditional method of salting not only brine baths were necessary for ordinary kinds of cheese, but in addition separate baths with dietary salt solutions for dietary cheeses, while when using the present process this is no longer necessary and a fresh solution of ordinary salt or dietary salt can be prepared per production.

The strength of the brine, the brine volume administered per injection and the number of injections per cheese determine the amount of salt in the cheese. By changing the stroke volume of the plunger of the high-pressure pump used for injection, the correct salt content can be administered as desired to cheeses having a variable weight or even completely automatically. In the case of the traditional systems with a brine bath or brine flowing the time of contact between the cheese and the brine should be selected such that at the given brine strength and temperature sufficient salt will migrate to the cheese according to the expectation of the man skilled in the art, which afterwards should be confirmed by analysis. It will be clear that the present injection system allows a much better control of the salt content of the cheese. If desired, even saturated brine or a brine suspension can be used.

As has been mentioned, an ordinary brine solution or a solution of dietary salt as is desired can simply be injected. It is also possible to prepare successively low-salt cheese and cheese having a normal salt content and this can be done without interruption of the production process. With a brine flowing system the problems with regard to switching are smaller but also with this system switching is only possible per lot of cheeses which as a group are treated together with the same brine and for the same time. In contrast therewith the present injection of brine allows a process change even per individual cheese.

The present process is a system susceptible to practical applications due to the advantage that the surface of the cheese is only minimally deformed. Injection with needles causes damage to the cheese rind with is difficult to repair and such a pin-hole is an irregularity from which undesired micro-organisms get the chance to grow in the cheese. In its turn this causes the hole to enlarge, whereby various defects in the rind and in the ripening of the cheese can come into being. The holes are also enlarged when nozzles are used for the injection but the cheese moves with regard to the nozzles during the injection.

The injection system of this invention can also be suitably used for administering other substances then salt to a cheese. Examples thereof are enzymes and micro-organisms, while also aroma substances, flavorants, colorants, proteins and the like can be injected into cheese or imitation cheese, by which a cheese prepared with non-milk fat or non-milk protein is meant.

The advantage of the addition of aroma substances, flavorants colorants, enzymes, micro-organisms and the like with the present system is that no loss of such usually relatively expensive additives is to feared, which loss otherwise does occur. After all, according to the usual practice such a substance is added to the mixture of coagulated curd and whey, so that a substantial part of the additive is lost together with the whey, while the so obtained whey contains the additive and thereby has become unsalable for normal purposes. Thus this type of additives constitutes a large cost factor in the traditional cheese production. Neither is it suitable in the traditional process to add such a substance after the whey has been already separated, because this leads to an irregular distribution of the additive since then only the outside of the fresh cheese mass comes into contact with the taste-determining ingredients.

In particular with cheese imitations from a mixture of vegetable fats and milk constituents, which do not give the desired dairy taste after a normal cheese ripening, it is of great importance that the added ingredients, which serve to render an acceptable taste to such an imitation, are distributed in a regular fashion and in the correct amount throughout the product. Due to this invention this can be achieved without high costs.

Also in the production of specialities and new products based on cheese, special effects can be achieved with the present high-pressure injection by using solutions or suspensions of new ingredients. Thus, according to the mention it is for example possible to incorporate vitamins, fibers, lecithin or other substances having a special physiological value into the cheese.

The following examples further illustrate this invention.

### Example 1

Cheese of the Gouda-type, having a diameter of 36 cm and a thickness of 10 cm, were injected with brine directly after leaving the cheese mold, using a device designed for injecting meat, poultry and fish with brine without employing needles. The cheese produced at 30°C was conveyed to the device without any other cooling than caused by the transport. The device contains for its normal use a conveyor belt which transports the material to be treated along the nozzles. In this case the belt was not caused to move. The brine had a strength of 21%. The injection device was equipped with 20 injection heads containing a nozzle having an opening of 0.2 mm. The nozzles used were designed such that the brine jet converged at a few mm before the cheese and thereafter became a divergent jet. The brine was injected in an amount of 150 ml per injection using a pressure of about 15 MPa.

For the present experiment methylene blue was added to the brine, so that directly after the injection the distribution of the brine throughout the cheese could be checked. It appeared that sufficient divergence of the jets from the nozzles had occurred, so that a homogeneous blue colour was obtained over the whole surface of the cheese, which colouring homogeneously decreased inwardly. It should be remarked that methylene blue binds to the cheese protein, so that it cannot further diffuse inwardly after the injection. After an otherwise normal post treatment the cheese was stored for ripening and the distribution of the salt content throughout the cheese was analysed in the young cheese. It was found that the injected salt was distributed uniformly over the whole cheese mass.

Several experiments were carried out with this process. It appeared that when the nozzles were pressed against the cheese, a good distribution of the brine was observed. When conveying the cheese on a conveyer belt below the nozzles, the jets from the nozzles cut into the surface and the cuts did not close well during subsequent ripening.

When using a weakly-acid brine the injection holes did not always close well without a pressing treatment. However, when the brine was slightly alkaline, the injection sites did close well, also without pressing again, so that during the ripening of the cheese no holes, cracks or undesirable growth of fungi of bacteria in the cheese surface occurred.

Furthermore it appeared advantageous to use a brine having the same temperature as the cheese or a higher temperature than the cheese. This prevents cooling of the rind and promotes closing of the holes.

### Example 2

With a similar device as in example 1, which however is equipped with a provision for continuously supplying and removing cheeses, a continuous production of salted cheeses was carried out, the amount of brine per treated cheese being adjusted by of the stroke volume of a plunger pump which injected the brine into the cheeses. It was possible to switch from the production of cheese with a normal salt content to cheese with only half of the normal salt content or to a low-salt dietary cheese without interuption, simply by adjusting the brine volume.

By letting the cheese move on a weighing belt, it appeared possible to confer to every individual cheese exactly the same salt content by having the stroke volume of the brine pump controlled by the cheese weight. In particular for cheese which is filled into cheese molds in traditional methods, the variation in the weight per cheese is a factor which is of importance for a correct salt content.

### Example 3

From an emulsion of vegetable fats in skim milk, prepared by distributing the fats in the milk with an emulsifier and homogenising followed by the usual addition of starter culture and rennet to the milk imitation in order to cause coagulation, a curd of imitation cheese was recovered which was pressed into molds after separation of the whey. A commercially available liquid cheese aroma composition was incorporated into the brine which had the same composition as the brine for a Gouda-cheese. Therefore a brine having additionally a cheese taste was distributed over the imitation cheese per brine injection. Thus after a ripening period of 28 days, which for real cheese is sufficient for obtaining young Gouda-cheese, a cheese could be obtained which had an aroma comparable to that of semi-matured or even matured cheese. It appeared that the aroma was distributed over the imitation cheese in a way similar to the brine, so that apparently also the aroma components can diffuse well through the cheese mass.

Imitation cheeses from the same lot, which were slated in a brine bath in a traditional fashion, did not obtain the taste of matured cheese even after ripening during a long period, but became in fact gradually less tasty. When, in order to overcome this drawback the cheese aroma composition was already added to the curd prior to the forming of the imitation cheese, much more of the aroma composition appeared to be necessary than in the present process in order to achieve the same aroma in the ripened products. The blending of the aroma composition in the form of granules by drying the commercially available composition, led to a less regular distribution of the aroma substances throughout the imitation cheese which organoleptically did not appear completely homogeneous.

## Claims

1. A process for treating cheese with a liquid prior to ripening, comprising spraying the liquid against the cheese surface with high-pressure nozzles under a pressure such that the liquid penetrates the cheese surface, and keeping the cheese and the nozzles in a stationary condition relative to each other during the spraying, **characterized** by using nozzles having a diameter of the outlet of not more than 0.3 mm, said nozzles spraying the treating liquid in a convergent jet.

2. A process according to clam 1, **characterized** by using as said treating liquid a solution or suspension of one or more of the following substances: aroma substances, flavorants, colorants, enzymes micro-organisms, proteins, vitamins, minerals and/or fibers having a nutritional value.

3. A process according to claim 1, **characterized** by using brine as said treating liquid.

4. A process according to claim 2 or 3, **characterized** by adjusting the degree of acidity of said liquid such that the pH of the cheese mass is locally increased after the injection of the solution and the injection site is thereby closed.

5. A process according to clams 1-4, **characterized** by promoting the closing of the injection site by pressure and/or heat.

6. A process according to claims 1-5, **characterized** by placing a number of nozzles around a cheese such that simultaneous injection of a treating liquid at a large number of sites of the surface of the cheese is possible in one processing step.

7. A process according to clams 1-6, **characterized** by adjusting the total volume of the treating liquid and the strength thereof such that the required content of the treating agent is incorporated into the cheese in one processing step.

8. A process according to claims 1-7, **characterized** by using a said treating liquid a salt solution which also contains enzymes and/or micro-organisms.

9. A process according to claims 1-8, **characterized** by using as said treating liquid a salt solution which contains one or more of the following substances: flavorants, odorants, aroma substances, colorants, vitamins, minerals, fibers having a nutritional value, enzymes, micro-organisms and proteins.

10. A process according to claims 1-9, **characterized** by adjusting the amount of injected treating liquid on the basis of the weight of the cheese mass which is to be injected.

11. A process according to claims 1-10, **characterized** by subjecting a cheese imitation, consisting of milk ingredients together with non-milk fat or non-milk protein, to an injection with said treating liquid.

12. A process according to claim 1-11, **characterized** by ripening the cheese which is treated with the liquid.

## Patentansprüche

1. Verfahren zur Behandlung von Käse mit einer Flüssigkeit vor der Reifung, bei dem man die Flüssigkeit mit Hochdruckdüsen unter einem solchen Druck auf die Käseoberfläche spritzt, daß die Flüssigkeit die Käseoberfläche durchdringt, und den Käse und die Düsen während des Spritzens in gegenseitig ortsfester Stellung hält, gekennzeichnet durch die Verwendung von Düsen mit einem Auslaßdurchmesser von höchstens 0,3 mm, wobei diese Düsen die Behandlungsflüssigkeit in einem konvergierenden Strahl ausspritzen.

2. Verfahren nach Anspruch 1, dadurch gekennzeichnet, daß man als solche Behandlungsflüssigkeit eine Lösung oder Aufschlämmung einer oder mehrerer der folgenden Stoffe verwendet: Aromastoffe, Geschmacksstoffe, Farbmittel, Enzyme, Mikroorganismen, Proteine, Vitamine, Mineralien und/oder Fasern mit Nährwert.

3. Verfahren nach Anspruch 1, gekennzeichnet durch die Verwendung von Sole als solche Behandlungsflüssigkeit.

4. Verfahren nach Anspruch 2 oder 3, dadurch gekennzeichnet, daß man den Säuregrad jener Flüssigkeit so einstellt, daß der pH der Käsemasse nach dem Einspritzen der Lösung lokal erhöht und die Einspritzstelle dadurch verschlossen wird.

5. Verfahren nach den Ansprüchen 1-4, dadurch gekennzeichnet, daß man das Verschliessen der Einspritzstelle durch Druck und/oder Hitze fördert.

6. Verfahren nach den Ansprüchen 1-5, dadurch gekennzeichnet, daß man eine Anzahl Düsen so um den Käse herum anordnet, daß gleichzeitiges Einspritzen einer Behandlungsflüssigkeit an zahlreichen Stellen auf der Käseoberfläche in einem Arbeitsgang möglich ist.

7. Verfahren nach den Ansprüchen 1-6, dadurch gekennzeichnet, daß man das Gesamtvolumen der Behandlungsflüssigkeit und deren Stärke so einstellt, daß der erforderliche Gehalt an Behandlungsmittel in einem Arbeitsgang in den Käse eingebracht wird.

8. Verfahren nach einem der Ansprüche 1-7, dadurch gekennzeichnet, daß man als solche Behandlungsflüssigkeit eine Salzlösung verwendet, welche ferner Enzyme und/oder Mikroorganismen enthält.

9. Verfahren nach den Ansprüchen 1-8, dadurch gekennzeichnet, daß man als solche Behandlungsflüssigkeit eine Salzlösung verwendet, welche einen oder mehrere der folgenden Stoffe enthält: Geschmacksstoffe, Geruchsstoffe, Aromastoffe, Farbmittel, Vitamine, Mineralien, Fasern mit Nährwert, Enzyme, Mikroorganismen und Proteine.

10. Verfahren nach den Ansprüchen 1-9, dadurch gekennzeichnet, daß man die Menge eingespritzter Behandlungsflüssigkeit gemäß dem Gewicht der der Einspritzung zu unterziehenden Käsemasse einstellt.

11. Verfahren nach den Ansprüchen 1-10, dadurch gekennzeichnet, daß man eine aus Milchbestandteilen zusammen mit nicht-Milchfett oder nicht-Milchprotein bestehende Käsenachahmung einer Einspritzung mit besagter Behandlungsflüssigkeit unterzieht.

12. Verfahren nach den Ansprüchen 1-11, gekennzeichnet durch Reifung des mit der Flüssigkeit behandelten Käses.

## Revendications

1. Procédé de traitement de fromage à l'aide d'un liquide avant mûrissage, consistant à pulvériser le liquide contre la surface du fromage avec des buses haute pression sous une pression telle que le liquide pénètre dans la surface du fromage et à maintenir le fromage et les buses dans un état stationnaire mutuel au cours de la pulvérisation, caractérisé en ce qu'on utilise des buses ayant un diamètre à la sortie qui n'est pas supérieur à 0,3 mm, lesdites buses pulvérisant le liquide de traitement de manière à former un jet convergent.

2. Procédé selon la revendication 1,
caractérisé en ce qu'on utilise comme liquide de traitement une solution ou une suspension d'une ou plusieurs des substances suivantes : substances aromatiques, assaisonnements, colorants, enzymes, micro-organismes, protéines, vitamines, minéraux et/ou fibres ayant une valeur nutritive.

3. Procédé selon la revendication 1,
caractérisé en ce qu'on utilise de la saumure au titre dudit liquide de traitement.

4. Procédé selon la revendication 2 ou 3,
caractérisé en ce qu'on règle le degré d'acidité dudit liquide de telle sorte que le pH de la masse du fromage soit localement augmenté après l'injection de la solution et que le site d'injection soit de ce fait fermé.

5. Procédé selon les revendications 1 à 4,
caractérisé en ce que l'on favorise la fermeture du site d'injection par application de pression et/ou de chaleur.

6. Procédé selon les revendications 1 à 5,
caractérisé en ce qu'on place un certain nombre de buses autour d'un fromage de telle sorte qu'une injection simultanée d'un liquide de traitement soit possible sur un grand nombre de sites de la surface du fromage par un seul stade de traitement.

7. Procédé selon les revendications 1 à 6,
caractérisé en ce qu'on règle le volume total du liquide de traitement et son intensité en sorte que la teneur en agent de traitement requise soit incorporée au fromage par un seul stade de traitement.

8. Procédé selon les revendications 1 à 7,
caractérisé en ce qu'on utilise comme liquide de traitement une solution saline qui contient également des enzymes et/ou des micro-organismes.

9. Procédé selon les revendications 1 à 8,
caractérisé en ce qu'on utilise comme liquide de traitement une solution saline qui contient une ou plusieurs des substances suivantes : assaisonnements, parfums, substances aromatiques, colorants, vitamines, minéraux, fibres ayant une valeur nutritive, enzymes, micro-organismes et protéines.

10. Procédé selon les revendications 1 à 9,
caractérisé en ce qu'on règle la quantité de liquide de traitement injectée sur base du poids de la masse de fromage qui doit être soumise à l'injection.

11. Procédé selon les revendications 1 à 10,
caractérisé en ce que l'on soumet un simili fromage constitué d'ingrédients lactés conjointement avec des graisses non lactées ou des protéines non lactées, à une injection par ledit liquide de traitement.

12. Procédé selon les revendications 1 à 11,
caractérisé en ce que l'on fait mûrir le fromage qui est traité avec ledit liquide.
